Europäisches Patentamt

European Patent Office

Office européen des brevets

(11) Publication number: 0 484 564 A1

# EUROPEAN PATENT APPLICATION

(21) Application number: 90121107.8

(22) Date of filing: 05.11.90

(51) Int. Cl.5: G01J 3/46, G06F 15/46

(43) Date of publication of application:
13.05.92 Bulletin 92/20

(84) Designated Contracting States:
DE FR GB NL

(71) Applicant: KANSAI PAINT CO. LTD.
33-1, Kanzaki-cho
Amagasaki-shi Hyogo-ken(JP)

(72) Inventor: Yoshino, Shoichi
c/o Kansai Paint Co.,Ltd.,24-15 Higashichi
5-chome
Shinagawa-ku, Tokyo(JP)

Inventor: Masai, Yoshiharu
c/o Kansai Paint Co.,Ltd.,3-6 Fushimi-cho
4-chome
Chuo-ku, Osaka-shi, Osaka(JP)
Inventor: Hirayama, Tohru
c/o Kansai Paint Co.,Ltd.,17-1 Higashiyawata
4-cho
Hiratsuka-shi, Kanagawa-ken(JP)

(74) Representative: Kraus, Walter, Dr. et al
Patentanwälte Kraus, Weisert & Partner
Thomas-Wimmer-Ring 15
W-8000 München 22(DE)

(54) Metered color matching method.

(57) A method of matching a color sample mixing
basic paints based on data transmitted to and from a
computer via a telephone circuit. Data obtained by
measuring a color sample are sent to the computer
and data for coloring matching are obtained, and a
test color is prepared based on the data for color
matching. The observed data obtained by measuring
the test color are sent to the computer to obtain
correction data. The device for sending the observed
data to the computer has a MODEM, an input de-
vice, an output device and a display device for
presenting calculated weights of basic paints.

FIG. 1

EP 0 484 564 A1

## Field of the Invention

The present invention relates to a metered color matching method for formulating coating solutions of desired colors for so-called in-store color matching which is performed in end retail stores handling coating compositions and performing repair coating of cars, for example.

## Background of the Invention

For example, there might often be subtle differences in paint colors of cars depending on the model, type and the like of individual cars even if the same color name is referred to.

For this reason, upon repairing coating of cars, a text is used which describes color matching data, from which workers have obtained color matching data such as proportions of a plurality of basic coating compositions (primary colors) to be mixed based on the information of the cars to be repaired, including their model, year of manufacturer, color name, and the like.

However, if the color of coating solutions is to be classified based on the model, year of manufacture, color name and the like of cars, a huge number of combination of parameters are required; it has been a very cumbersome work to search and identify a desired color in the text and obtain from the text necessary data such as proportions of a plurality of basic coating compositions to be mixed in order to prepare a coating composition of the desired color thus identified.

The color matching data in principle relate to compositions which are matched for their color using as color sample the color of so-called new cars just after coating on a production line. On the contrary, cars which are actually brought for repairing have suffered from deterioration with age with various histories and usually their paint color have undergone discoloration and/or fading to a greater extent than the paint color of new cars. Furthermore, it is often the case that the paint color is different or non-uniform even among new cars of the same model and type depending on coating line and lot number of paint used.

In most cases, differences in lot of and conditions of preservation of basic paints used for metered color matching cause failure to give the same color from car to car even when precise metering is conducted.

Similar problem arises in the case of color matching by means of color code designation which is carried out in the instore color matching. That is, color sample note in which color samples corresponding to color codes are collected is prepared and distributed usually in a large number and there tend to occur unevenness among the numerous notes in the colors of the color samples collected therein depending on the lot of and conditions of preservation of the color sample notes. Thus, similar disadvantages to those described above would arise.

While prior art computerized color matching can be used in order to solve the above-described problems, it is necessary according to the prior art to locate at least a color meter, a computer device and a display device for displaying outputs from the computer device in site where color matching operations are to be conducted. The provision of such apparatus or devices from place to place where color matching operations are to be conducted causes a new problem from an economical point of view, and in addition it is undesirable to arrange computer devices and the like at the job site where fine particles of paint are floating around.

## Summary of the Invention

In order to solve the above-described problems, the present invention provides a method of matching color, comprising the steps of:

measuring a color sample using a color meter to obtain observed data on the color sample,

sending the observed data to a computer device via telephone circuit,

analyzing the observed data on the color sample using the computer device to obtain data for color matching,

sending the data for color matching via telephone circuit to a metering and mixing section,

metering and mixing basic paints based on the data for color matching to obtain a metered and mixed composition of basic paints,

obtaining data of actual metering of the metered and mixed composition of basic paints,

preparing a test color using the metered and mixed composition of basic paints,

measuring the test color using a color meter to obtain observed data of the test color,

sending the data of actual metering and observed data of the test color via telephone circuit to the computer device,

processing using the computer device the observed data of the color sample, the observed data of the test color and the data of actual metering to obtain correction data,

sending the correction data via telephone circuit to the metering and mixing section, and

adding basic paints for correction to the metered and mixed composition of basic paints according to the correction data.

In this color matching method, the observed data, data of actual metering, data for color matching and correction data are send via telephone circuit. Therefore, it is unnecessary to provide a computer device at each metering and mixing section. Because the various data can be processed by only one computer device placed at one desired location, maintenance and management of basic data to be used for processing information are facilitated. Also, this enables input and output of data from a wide range of areas. Furthermore, because the correction data are obtained from the observed data of the color sample, the observed data of the test color and the data of actual metering, accurate correction data can be obtained and thus accurate color matching can be performed.

According to the present invention, the observed data, the data of actual metering, and the observed data of the test color are sent to the computer device via the telephone circuit, and in turn the data for color matching and correction data are sent from the computer device to the metering and mixing section through the telephone circuit. This construction makes it sufficient to provide only one computer device for recording various data at an appropriate location, which avoids the necessity of providing a computer device at each metering and mixing section.

Furthermore, because correction data are obtained based on the observed data of the color sample, the data of actual metering and the observed data of the test color, metering and mixing can be practiced with high accuracy.

Brief Description of the Invention

Fig. 1 is a block diagram illustrating the metered color matching system according to a preferred embodiment of the present invention.
Fig. 2 is a schematic perspective view of the MODEM terminal device and the metering and mixing section used in the system illustrated in Fig. 1; and
Fig. 3 is a flow chart illustrating the method of metered color matching according to a preferred embodiment of the present invention.

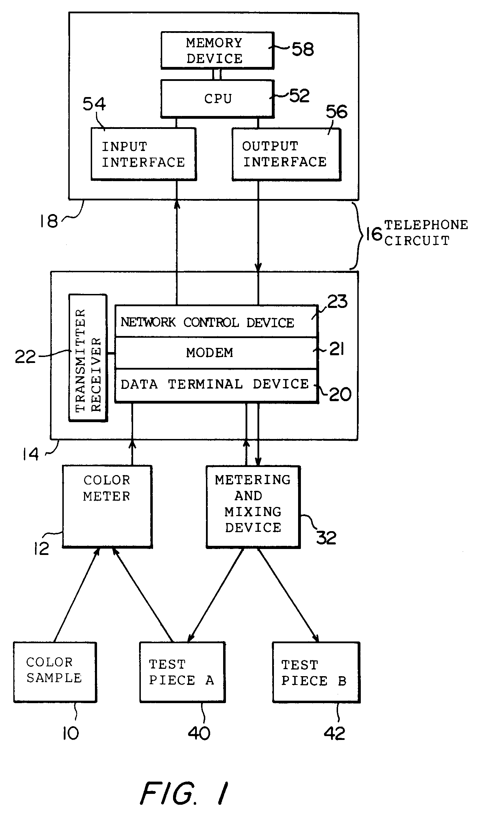

Hereafter, the present invention will be described in greater detail with reference to Figs. 1 to 3 illustrating preferred embodiments of the present invention.

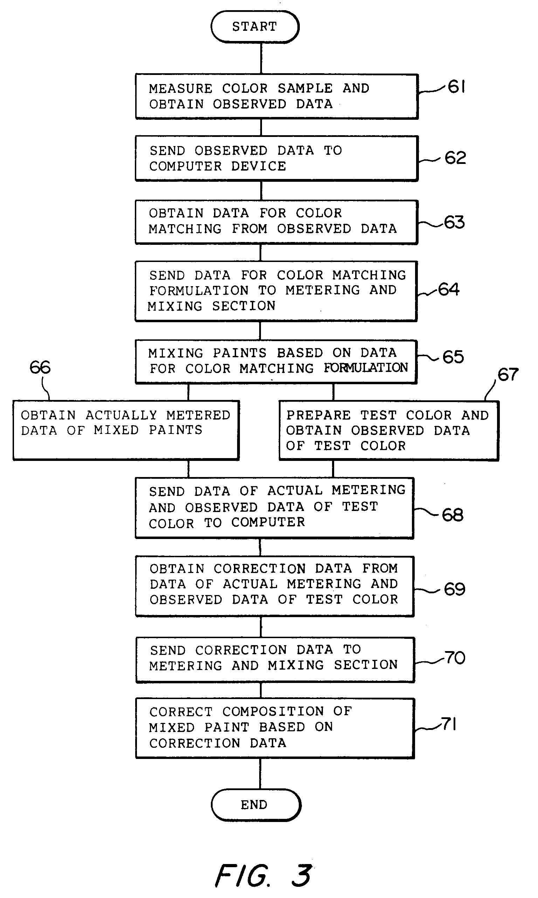

Color Metering Step (Step 61, Fig. 3)

For example, a color sample 10 which is a color intended to be located on a car body is measured by a color meter 12 to obtain observed data of the color sample 10.

As for the color meter 12, there can be used, for example, a colorimeter-differential colorimeter with which a color sample is illuminated by a Xenon lamp and reflected lights are analyzed to obtain observed data indicating the color of the color sample using known color representation modes such as Yxy, $La^*b^*$, and the like.

It is preferred that the color meter 12 have a non-volatile memory which can store the observed data temporarily. The use of the color meter with such non-volatile memory enables practicing the steps of measurement and transmission in separate places.

As for this type of color meter, a photo-electrical tristimulus colorimeter CR-231 manufactured by Minolta Camela Co., Ltd., Japan can be used.

Of course, the measurement of the color sample can be performed in a state where the color meter 12 and a computer device 18 are connected to each other and immediately after the measurement, the observed data are transmitted to the computer device 18.

Transmission Step (Step 62)

Next, the observed data of the color sample 10 are sent to the computer device 18 via telephone circuit 16 using a MODEM terminal device 14.

The MODEM terminal device 14 preferably includes a data terminal device 20, a MODEM 21, a network control device 23 and telephone transmitter and receiver 22.

The data terminal device 20 includes, for example, an input device to which are connected a keyboard 26 and a color meter and which is provided with an input terminal 28 for inputting the observed data measured by the color meter, and an output device to which are connected a liquid crystal display device 24 and a metering device and which is provided with an output terminal 30 for outputting the output data from the computer device to the metering device.

The MODEM 21 on one hand converts digital signals input thereto into analog signals in a voice suitable for transmission via telephone circuit and sends them to the network control device, and on the other hand, converts analog signals sent thereto into digital output signals and send them to the data terminal device 20.

The mesh control device 23 is arranged between the MODEM and the telephone circuit 16 and controls the actions of the exchange device such as automatic transmission, automatic response and manual transmission.

The color meter 12 is connected to the input device of the MODEM terminal device 14, and the observed data stored in the memory of the color meter 12 are input via the input device. In addition, information such as the color code of the color sample, grade of the paints making up the coating solution, manufacturers of the paints, and necessary amounts of the paints are sent to the computer device 18 via the telephone circuit 16 from the keyboard 26 or from the memory stored in the color meter 12.

Instead of the above-described construction, a combination of a sound coupler and a telephone may also be used for sending the observed data and the like via the telephone circuit 16 to the computer device 18.

Alternatively, a so-clled push phone type telephone can be used for inputting information including the observed data by operating the push buttons.

It is preferred to perform the above-described type of transmission and reception utilizing VAN (value added network) service.

## Calculating Step (Step 63)

Next, the computer device 18 calculates data for color matching from the color code of the color sample, grade of the paints making up the paint (liquid), manufacturers of the paints, and necessary amounts of the paints.

The computer device 18 is provided with a central processing unit (CPU) 52, an input interface 54, an output interface 56 and memory or recording means 58 for recording various data and programs for operating the algorithm.

For example, the color of the body of an ordinary car can be identified by a color code and accurate basic data for color matching in order to produce the color thus identified are known. Therefore, it is preferred that the computer device 18 performs the calculation of data for color matching after comparing the color identified by the color code of the color sample with the observed data to obtain differences in color, and correcting the basic data for color matching on the color code stored in the computer device 18 in accordance with the difference in color obtained.

The observed data of the color sample is stored in the memory in the computer device 18 so that they can be used later on for the production of correction data.

## Reception Step (Step 64)

The data for color matching calculated by the computer device 18 are sent to a metering and mixing seciton 32 via the telephone circuit 16 and the MODEM terminal device 14.

The data for color matching are displayed on a display section 36 of the MODEM terminal device 14. Alternatively, the MODEM terminal device may be provided with a facsimile function so that it can display the data for color matching on paper.

## Mixing Step (Step 65)

Then, basic paints are metered and mixed in the metering and mixing section 32 based on the data for coloring matching.

As described above, the metering and mixing section 32 is provided with a metering device and the basic paints are each metered manually in accordance with the data for color matching displayed and mixed with each other to obtain a paint (liquid).

The metering and mixing section 32 may be constructed so as to include a digital metering device 34 provided with a display device 36 and the data for color matching from the MODEM terminal device 14 can be displayed on the display device 36.

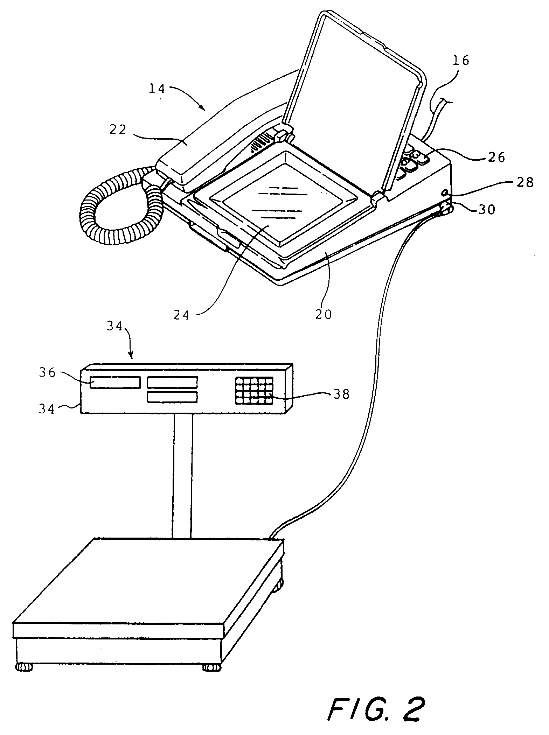

Furthermore, an on-line metering device can be used which includes an integral assembly of the MODEM terminal device and the metering device. In this case, the appearance of the on-line metering device is substantially the same as that of the digital metering device 34 with a display device illustrated in Fig. 2 yet has a MODEM and a network control device inside thereof. With this device, outputs are displayed on the display section 36 and data can be input by means of the keyboard 38. If desired, an input terminal (not shown) to which the color meter is connected and an output terminal (not shown) to which otehr display means is connected can be provided.

The on-line metering device is provided with a digital metering device having a display device which displays values of the weight of the paint metered. Furthermore, the device may be provided with a MODEM which converts digital signals into analog signals in a voice band. The MODEM is connected to an input device through which the observed data obtained by the color meter is sent to the MEDEM. In addition, the MODEM is connected to an output device which transmits signals from the MODEM to the computer 18 via a telephone circuit.

Using the paint (liquid) thus obtained, a color which matches the color of the color sample can be obtained.

The metering device may preferably be constructed by an automated metering device having the following metering adaptation function.

That is, in the mixing step, a plurality of basic paints are introduced into the vessel in accordance with the data for color matching, and mixed to produce a paint (liquid). However, in practice, it is difficult to chrge all the basic paints in amounts exactly in accordance with the ata for coloring matching.

For this reason, the automated metering device is constructed as follows. That is, the automated metering device is provided with a memory device, and measures the weight of the first paint charged in accordance with the data for color matching and stores it in the memory device. Then, the metering device measures the weight of the second basic paint charged in accordance with the data for color matching, and stores it in the memory device. Then the metering device calculates a ratio of the weight of the first basic paint to the weight of the second basic paint by the ratio generation means, and compares the ratio thus obtained with the ratio contained in the data for color matching by comparing means, calculating such an amount of one of the basic paints to be added that after the addition, the two ratios can be equal, and displays the amount on the display device.

Paints are mixed in accordance with the data for color matching and the adaptation data thus obtained.

Usually, no less than three basic paints are used. In this cases, one of the basic paints whose ratio of excess loading is the highest is selected and based on which adaptation data on the rest basic paints are obtained.

Actual Metering Step (Step 66)

Next, data of actual metering of the metered and mixed basic paints are obtained.

When metering and mixing the basic paints based on the data for color matching, it is tried to perform the metering as accurate as possible so that the metered amounts are as close as possible to the data for coloring matching. However, it is usually the case that even if the above-described adaptation data are used, strictly it is impossible to meter the paints so as to exactly coincide with the data for color matching. Or, even if a paint (liquid) is used whose ingredients have been metered so as to strictly coincide with the data for color matching, the intended color does not develop accurately.

In order to cope with this, the weights of the basic paints actually metered and mixed are recorded as data of actual metering, which will be utilized later on for correcting the data for color matching.

Test Color Measuring Step (Step 67)

Subsequently, a test color is prepared from the basic paints metered and mixed as described-above, and the test color is measured by a color meter to obtain observed dat of the test color.

The test color is prepared by coating a paint (liquid) mixed in accordance with the above-described data for color matching and the above-described adaptation data on a predetermied substrate, followed by drying to obtain a test piece A40, and the test piece A40 is measured for its color in the same manner as the measurement of the color sample to obtain observed data of the test piece A40.

Instead of the above-described procedure, the color of the paint (liquid) itself may be measured and defined as observed color of the test color. The investigation by the present inventors have revealed that there is more or less differences between the color of a paint (liquid) itself and the color of a test piece obtained by coating the paint (liquid) on a substrate and drying, and that there is a certain relationship between the color of the paint (liquid) itself and the color of the test piece provided that the grade and other parameters of the basic paints constituting the coating soltuion used are identified. Therefore, the color of the test piece can be identified from the color of the paint (liquid) prepared as described above. Or, conversely, the color of the paint (liquid) itself which has been used for preparing the color sample can be count backward.

Therefore, the color of the paint (liquid) itself is measured by the color meter 12, and the data obtained are used as observed data.

Transmission Step (Step 68)

Next, the data of actual metering thus obtained and the observed data of the test color are transmitted to the computer device 18 via the telephone circuit 16 using the MODEM terminal device 14.

Calculation Step (Step 69)

Then, correction data are calculated from the data of actual metering and the observed data of the test piece A40 thus transmitted to the computer device 18 as well as the information stored in the memory device of the computer 18 such as observed data of the color sample, color codes, grades of paints and manufacturers.

The correction data define the amounts of basic paints to be added to the above-described paint (liquid) mixed as described above in order to produce a color which matches the color of the color sample.

As described above, in Step 63 the computer device 18 calculate data for coloring matching from the observed data of the color sample, the color code of the color of the color sample, the grade of the paints constituting the paint (liquid), the names of the manufacturers of the paints, the amount of the paints required, and the like, and in Step 69 it calculates correction data from the observed data of the color sample, the color code of the color of the color sample, the grade of the paints constituting the paint (liquid), the names of the manufacturers of the paints.

As for the program for practicing these calculations, there can be used known computer color matching program, for example, a software "PIGMENTA" (Trademark) of DATACOLOR AG (Switzerland) can be used.

Reception Step (Step 70)

Next, the correction data are sent to the metering and mixing section 32 via the telephone circuit 16.

Correction Step (Step 71)

Additional amounts of the basic paints are added to the paint (liquid) metered and mixed as described above in accordance with the correction data to correct the composition of the paint (liquid). The paint (liquid) thus obtained matches the color sample very well because reference is also had to the characteristics of the paints actually used.

Variation

If desired, the composition of the coating solution may be corrected again by preparing a second test piece B42 using the once corrected paint (liquid), and then obtaining observed data of the second test piece B42, or measuring the color of the once corrected paint (liquid) itself, to obtain second correction data and correcting the composition of the once corrected paint (liquid). If desired, similar procedures may be repeated to prepare third, fourth or more test pieces and correct the composition of the paint (liquid) further.

It is apparent that the present invention can be used not only in reparing coating of cars but also in various other purposes.

The invention has been described in detail with respect to embodiments, and it will now be apparent from the foregoing to those skilled in the art that changes and modificaitons may be made without departing from the invention in its broader aspects, and it is the invention, therefore, in the appended claims to cover all such changes and modifications as fall within the true spirit of the invention.

**Claims**

1. A method of matching color, comprising the steps of:

measuring a color sample using a color meter to obtain observed data on the color sample,

sending the observed data to a computer device via telephone circuit,

analyzing the observed data on the color sample using the computer device to obtain data for color matching,

sending the data for color matching via telephone circuit to a metering and mixing section,

metering and mixing basic paints based on the data for color matching to obtain a metered and mixed composition of basic paints,

obtaining data of actual metering of the metered and mixed composition of basic paints,

preparing a test color using the metered and mixed composition of basic paints,

measuring the test color using a color meter to obtain observed data of the test color,

sending the data of actual metering and observed data of the test color via telephone circuit to the computer device,

processing using the computer device the observed data of the color sample, the observed data of the test color and the data of actual metering to obtain correction data,

sending the correction data via telephone circuit to the metering and mixing section, and

adding basic paints for correction to the metered and mixed composition of basic paints according to the correction data.

2. The method of claim 1 in which said metering and mixing section is formed by a communication metering apparatus comprising an integral assembly of:

a MODEM which converts digital signals and analog signals in voice band to each other,

an input device which is connected to the MODEM and sends observed data obtained by a color meter to the MODEM,

an output device which is connected to the MODEM and outputs output signals generated by the MODEM, and

a digital metering device with a display device which displays metered weight values

3. The method of claim 1 in which said metering and mixing section has:

a MODEM terminal device which is connected to the color meter and receives the observed data, and

an automated metering device which is coupled with the MODEM terminal device and receives the data for color matching from the computer device and meter a plurality of basic paints in amounts by weight according to the data for color matching.

4. The method of claim 1 in which said step for analyzing the observed data includes:

identifying a specified color by a color code,

comparing the observed dat of the color sample with the specified color to obtain differences therebetween, and

correcting a predetermined data of color matching for the specified color in accordance with the differences thus obtained.

*FIG. 1*

FIG. 2

START

MEASURE COLOR SAMPLE AND
OBTAIN OBSERVED DATA — 61

SEND OBSERVED DATA TO
COMPUTER DEVICE — 62

OBTAIN DATA FOR COLOR
MATCHING FROM OBSERVED DATA — 63

SEND DATA FOR COLOR MATCHING
FORMULATION TO METERING AND
MIXING SECTION — 64

MIXING PAINTS BASED ON DATA
FOR COLOR MATCHING FORMULATION — 65

66

OBTAIN ACTUALLY METERED
DATA OF MIXED PAINTS

67

PREPARE TEST COLOR AND
OBTAIN OBSERVED DATA
OF TEST COLOR

SEND DATA OF ACTUAL METERING
AND OBSERVED DATA OF TEST
COLOR TO COMPUTER — 68

OBTAIN CORRECTION DATA FROM
DATA OF ACTUAL METERING AND
OBSERVED DATA OF TEST COLOR — 69

SEND CORRECTION DATA TO
METERING AND MIXING SECTION — 70

CORRECT COMPOSITION OF
MIXED PAINT BASED ON
CORRECTION DATA — 71

END

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | GB-A-2 192 455 (JONES-BLAIR)<br>* abstract *<br>* page 2, line 74 - line 92; figure 1 *<br>* page 3, line 52 - line 74 *<br>--- | 1,4 | G01J3/46<br>G06F15/46 |
| Y | PATENT ABSTRACTS OF JAPAN<br>vol. 12, no. 18 (M-660)(2865) January 20, 1988<br>& JP-A-62 178 346 (ISHIZAKA SHOJI ) August 5, 1987<br>* the whole document *<br>--- | 1,4 | |
| A | EP-A-0 251 520 (BUDDY SYSTEMS)<br>* abstract; figure 1 *<br>--- | 1-3 | |
| A | US-A-4 403 866 (FALCOFF)<br>* column 4, line 52 - column 5, line 6 *<br>* figure 1 *<br>* column 5, line 57 - line 64 *<br>--- | 1,4 | |
| A | EP-A-0 319 375 (DAVID)<br>----- | | TECHNICAL FIELDS SEARCHED (Int. Cl.5 )<br><br>G01J<br>G06F |

The present search report has been drawn up for all claims

| Place of search | Date of completion of the search | Examiner |
|---|---|---|
| THE HAGUE | 17 JUNE 1991 | THOMAS R.M. |

EPO FORM 1503 03.82 (P0401)